# EUROPÄISCHE PATENTSCHRIFT

(11) **EP 0 558 695 B1**
(45) Veröffentlichungstag und Bekanntmachung des Hinweises auf die Patenterteilung: **02.01.1997**
(21) Anmeldenummer: 92913560.6
(22) Anmeldetag: 03.07.1992
(51) Int. Cl.: B64D 17/72

(54) **SPRUNG- UND RETTUNGSFALLSCHIRM**
SPORT AND ESCAPE PARACHUTE
PARACHUTE DE SAUT ET DE SECOURS

(30) Priorität: 08.07.1991 DE 4122558
(43) Veröffentlichungstag der Anmeldung: 08.09.1993
(73) Patentinhaber: Brumme, Rüdiger, D-92339 Beilngries (DE)
(72) Erfinder: Brumme, Rüdiger, D-92339 Beilngries (DE)
(74) Vertreter: Schneck, Herbert, Dipl.-Phys., Dr.
(86) Internationale Anmeldenummer: EP9201501
(87) Internationale Veröffentlichungsnummer: WO9301089

(56) Entgegenhaltungen:
- DE-A- 2 706 006
- DE-A- 4 039 516
- DE-U- 8 911 832
- FR-A- 1 051 874
- GB-A- 998 647

## Beschreibung

Die Erfindung richtet sich auf einen Sprung- und Rettungsfallschirm gemäß dem Oberbegriff von Anspruch 1. Ein solcher Fallschirm ist aus der DE-A-27 06 006 bekannt. Dieser vorbekannte Fallschirm ist speziell als Kreuzfallschirm ausgestaltet.

Generell ist ein Fallschirm mit Öffnungshilfe auch aus DE-U-89 11 832 bekannt. Dort wird ein Sprung- und Rettungsfallschirm beschrieben mit einer Öffnungshilfe in Form eines längs wenigstens des Randabschnittes des Fallschirms verlaufenden, durch Druckluft aufblasbaren Schlauches.

Der FR-A-10 51 874 ist es insbesondere bekannt, eine Öffnungshilfe längs eines Nahtabschnittes verlaufen zu lassen.

Hiervon ausgehend liegt der Erfindung die Aufgabe zugrunde, eine Öffnungshilfe zu schaffen, die speziell den spezifischen Anforderungen bei Kreuzfallschirmen in optimaler Weise gerecht wird.

Diese Aufgabe wird gelöst gemäß dem kennzeichnenen Teil von Anspruch 1 und 2.

Mit einem derart ausgestalteten Schirm können außerordentlich kurze Öffnungszeiten und ein äußerst stabiles Sinkverhalten erreicht werden.

Nachfolgend wird die Erfindung anhand eines bevorzugten Ausführungsbeispieles in Verbindung mit der Zeichnung näher beschrieben. Dabei zeigen
- Fig. 1: eine Aufsicht auf einen Kreuzfallschirm mit Öffnungshilfe im flach ausgelegten Zustand,
- Fig. 2: eine schematische Darstellung des Fallschirms nach Fig. 1 im Schwebezustand,

Andererseits gibt es auch Öffnungshilfen mit Schlauchsystemen, die an der Fallschirmkappe angebracht sind und nach dem Packen mit Luft gefüllt werden, wobei die Schläuche dann mit Druckluft gefüllt bleiben. Auch hier besteht das Problem, daß es aufgrund von Knickungen dazu kommen kann, daß der Schlauch ganz oder abschnittsweise nicht mit Luft hinreichenden Drucks gefüllt ist.

Schläuche, die aufgrund ihres leichten Gewichtes, welches für den speziellen Anwendungsfall erforderlich ist, an sich in Betracht kämen, weisen in der Regel nicht eine hinreichende Temperaturbeständigkeit, keine Luftleitfähigkeit im geknickten Zustand, keine hinreichende Dichtigkeit und damit kein ausreichendes Haltevermögen für die eingefüllte Luft, nicht die geforderte Unempfindlichkeit gegen mechanische Einwirkungen, nicht die notwendige Formstabilität, Reißfestigkeit, Alterungsbeständigkeit und Lichtempfindlichkeit auf und tendieren dazu, in sich selbst zu verkleben.

Hinsichtlich des gesamten Systems Schlauch-Fallschirm besteht das Problem, daß ein starkes Pendeln des Fallschirms nach dem Öffnen auftreten kann, was dazu führen kann, daß der Springer mit dem Rücken voraus am Boden landen kann, woraus ein erhebliches Unfallrisiko resultiert.

Weiterhin können durch eine unter hohem Druck stehende schlauchartige Öffnungshilfe die Dreh- und Steuereigenschaften eines Fallschirms stark eingeschränkt werden.

Weiterhin ist zu berücksichtigen, daß wegen des Luftdruckes in der Öffnungshilfe der Fallschirm nach der Landung nicht sofort zusammenfällt, so daß die Gefahr besteht, daß bei stärkerem Wind der Fallschirmspringer mit dem Fallschirm fortgeschleift und im harmloseren Fall der Fallschirm selbst beschädigt wird.

Letztlich ist zu berücksichtigen, daß herkömmliche, mit Öffnungshilfen versehene Fallschirme sich in der Regel nicht für hohe Absetzgeschwindigkeiten von z.B. 25o km pro Stunde und mehr eignen, da die durch die heftigen Öffnungs- und Füllstöße bedingten Stoß- bzw. Zugbelastungen für Mensch und Material zu hoch sind.

Hiervon ausgehend liegt der Erfindung die Aufgabe zugrunde, einen Fallschirm der eingangs genannten Art so auszugestalten, daß er bei höchster Öffnungssicherheit ein extrem tiefes Absetzen bzw. Abspringen bei hohen Absetzgeschwindigkeiten und unter Wahrung der Steuerbarkeit und Drehbarkeit des Fallschirms sowie unter Vermeidung gefährlicher Pendelbewegungen gestattet. Dabei werden bei automatisch ausgelöstem Fallschirm Absprunghöhen bis zu 6o m und bei Reserve- und Rettungsfallschirmen noch aus ca. 3o m angestrebt.

Diese Aufgabe wird bei einem Fallschirm der eingangs genannten Art dadurch gelöst, daß der Schlauch bzw. ein Schlauchabschnitt aus einem Polyurethanschlauch auf Polyetherbasis besteht.

Diese Materialkombination liefert in Verbindung mit den nachstehend noch angesprochenen mechanischen Eigenschaften einen Fallschirm mit überragenden Sprung- und Sicherheitsqualitäten.

Der erfindungsgemäß vorgesehene Schlauch weist eine Temperaturfestigkeit bis minus 5o°C und selbst bei minus 6o°C noch eine ausreichende Flexibilität und Bruchfestigkeit auf. Der Schlauch ist bis 1oo°C einsetzbar, weist eine Shore-Härte von ca. 87 und ein spezifisches Gewicht von ca. 1,12 auf. Bei einer Zugfestigkeit von ca. 5o N/mm² beträgt die Bruchdehnung 600% und die Weiterreißfestigkeit 6o N/mm.

Für einen derartigen Fallschirm, wie er hinsichtlich seiner konstruktiven Einzelheiten auch im nachfolgenden noch beschrieben wird, ergeben sich zahlreiche sehr interessante Anwendungsgebiete, z.B. im millitärischen Bereich als Sprung- und Reservefallschirm sowie auch als Lastenfallschirm. Im zivilen Bereich kann der Schirm als Rettungsfallschirm für Sportflieger, Segelflieger, Ultraleichtflieger, Drachenflieger usw. ebenso wie als Lasten- und Versorgungsfallschirm für Not- und Katastrophenfälle sowie als Rettungsfallschirm bei Hochhausbränden und dgl. eingesetzt werden.

Günstigerweise kann vorgesehen sein, daß der Schlauch als geschlossene Konfiguration mit einem Einlaßstutzen ausgebildet ist. Im Gegensatz zu herkömmlichen, endseitig geschlossenen Fallschirmen wird hierdurch die Öffnungsgeschwindigkeit erhöht. Grundsätzlich allerdings ist ein erfindungsgemäßer Schlauch auch für konventionelle, endseitig geschlossene Schlauchabschnitte geeignet.

Günstigerweise kann bei einem Fallschirm herkömmlichen Zuschnitts vorgesehen sein, daß zwei Schlauchabschnitte sich in Richtung auf den Scheitel des Fallschirms zu sich dort überkreuzend erstrecken. Hierdurch wird nicht nur der Fallschirmrand beim Öffnen schnell aufgefaltet, sondern die gesamte Fallschirmkonfiguration zwangsweise unter Unabhängigkeit von dem angreifenden Wind ausgebildet.

Die Schlauchabschnitte können bei dieser Ausführungsform im Kreuzungsbereich in Druckluftverbindung miteinander stehen, um die Schlauchabschnitte z.B. vom Rand her zentral mit Druckluft versorgen zu können.

Zur Erzielung einer besonders schnellen Öffnung und auch einer Öffnungsbeschleunigung im Falle einer leichten Teilleckage kann vorgesehen sein, daß jeder Schlauchabschnitt durch ein gesondertes Druckluftventil mit Druckluft beaufschlagbar ist.

Die erfindungsgemäße Lösung eignet sich besonders für einen Fallschirm, bei dem der wenigstens eine Schlauchabschnitt nach dem Packen des Fallschirms mit Druckluft beaufschlagt wird, wobei das zugeordnete Ventil von diesem Zeitpunkt an geschlossen bleibt. Aufgrund der hohen Dichtigkeit des verwendeten Schlauchmaterials ist eine Brauchbarkeit dieses Systems auch über längere Zeiträume gewährleistet.

Bei der Verwendung eines derartigen Fallschirms als Reservefallschirm kann vorgesehen sein, daß das Ventilende des wenigstens einen Schlauchabschnittes aus der geschlossenen Packhülle herausragt bzw. dort nach einer eventuellen Überprüfung wieder verstaubar ist.

In besonders günstiger Weise kommen die Eigenschaften eines erfindungsgemäßen Fallschirms zu tragen bei einem als Kreuzfallschirm ausgebildeten Fallschirm, der wenigstens vier durch je einen freien Schlitz voneinander getrennte, im geöffneten Zustand im wesentlichen vertikal verlaufende Stoffbahnen gebildet ist. Derartige Kreuzfallschirme sind ebenfalls an sich bekannt.

Durch die Verbindung der an sich bekannten Kreuzfallschirmkonstruktion mit einer schlauchförmigen Öffnungshilfe wird bei einer sehr schnellen und gezielten Öffnung des Fallschirms erreicht, daß Pendelbewegungen zuverlässig verhindert werden.

Bei dieser Ausführungsform kann vorgesehen sein, daß zwei Schlauchabschnitte sich etwa in der Mitte der vier Stoffbahnen nach oben erstrecken und sich im Bereich der Scheitelöffnung kreuzen. Alternativ ist es möglich, daß sich Schlauchabschnitte längs der Unterkante und der Seitenkanten in geschlossener Konfiguration erstrecken.

Bei einer Ausführungsform, bei der mit endseitig geschlossenen Schlauchabschnitten gearbeitet wird, kann günstigerweise vorgesehen sein, daß das geschlossene Ende des Schlauchabschnittes mittels einer Quetschhülse und eines an der Innenseite des Schlauchabschnittes angeordneten Widerlagers verschlossen ist.

Bei allen vorstehend beschriebenen Ausführungsformen ist der erfindungsgemäße Schlauch günstigerweise von einem Armierungsgewebe umgeben, das den Druck des Schlauches aufnimmt, so daß der Schlauch selbst relativ dünnwandig ausgebildet sein kann. Außerdem hat ein derartiges Armierungsgewebe den Vorteil, den Kunststoffschlauch vor UV-Strahlung und anderen Umwelteinflüssen zu schützen.

Das Armierungsgewebe ist mit Vorteil überlappend um den jeweiligen Schlauchabschnitt gelegt, wobei durch den Überlappungsbereich ein Befestigungsabschnitt geschaffen wird, der eine Verbindung mit dem Innen- oder Außenrand des Fallschirmstoffes, insbesondere natürlich durch Vernähen, gestattet.

Eine erfindungsgemäße Ausgestaltung ermöglicht es, daß bei der Verwendung als Hauptfallschirm in Verbindung mit einem Reservefallschirm der Hauptfallschirm und der Reservefallschirm entgegen herkömmlichen Konstruktionen übereinander angeordnet werden können.

Zusammenfassend läßt sich feststellen, daß Fallschirme der vorstehend beschriebenen Art entscheidende Vorteile aufweisen, nämlich absolute Öffnungssicherheit, die Möglichkeit des Absetzens von Lasten und des Springens aus niedrigsten Höhen, die Realisierung eines schnellen und gleichmäßigen und dabei sicheren Öffnungsvorganges der Fallschirmkappe, eine kleine Masse, ein sehr geringes Packvolumen, durch Einstellung des Luftdrucks in der Öffnungshilfe genau definierte Öffnungszeiten, gute Dreh- und Steuereigenschaften des Fallschirms, pendelfreies Sinken, eine geringe Sinkgeschwindigkeit bei hoher Tragkraft, die Vermeidung von Pumpbewegungen und Fehlentfaltungen, Sicherheit auch bei leichten Packfehlern, z.B. durch Leinenverdrehung, Einsetzbarkeit bei hohen Abwurf- bzw. Abspringgeschwindigkeiten begünstigt durch die Schlitze in der Kreuzfallschirmversion, Verringerung der Zahl der Fangleinen, Möglichkeit des Verzichts auf einen Reservefallschirm, Verwendungsmöglichkeit von luftdichtem Fallschirmgewebe, wirtschaftliche Herstellbarkeit und vielseitige Einsatzmöglichkeiten, auch als Einwegfallschirm.

Bei einer Ausführungsform, welche sich in der Praxis als ganz besonders vorteilhaft erwiesen, ist vorgesehen, daß bei einem Kreuzfallschirm mit einer etwa quadratischen zentralen Stoffbahn, von deren Seitenkanten weg sich je eine vertikalen Stoffbahn erstreckt, der Schlauch längs der Seitenkanten des Dachteils verläuft, vorzugsweise in Form einer geschlossenen, viereckigen Konfiguration.

Mit einem solchen Schirm wurde eine außerordentlich kurze Öffnungszeit und ein außergewöhnlich stabiles Sinkverhalten erreicht.

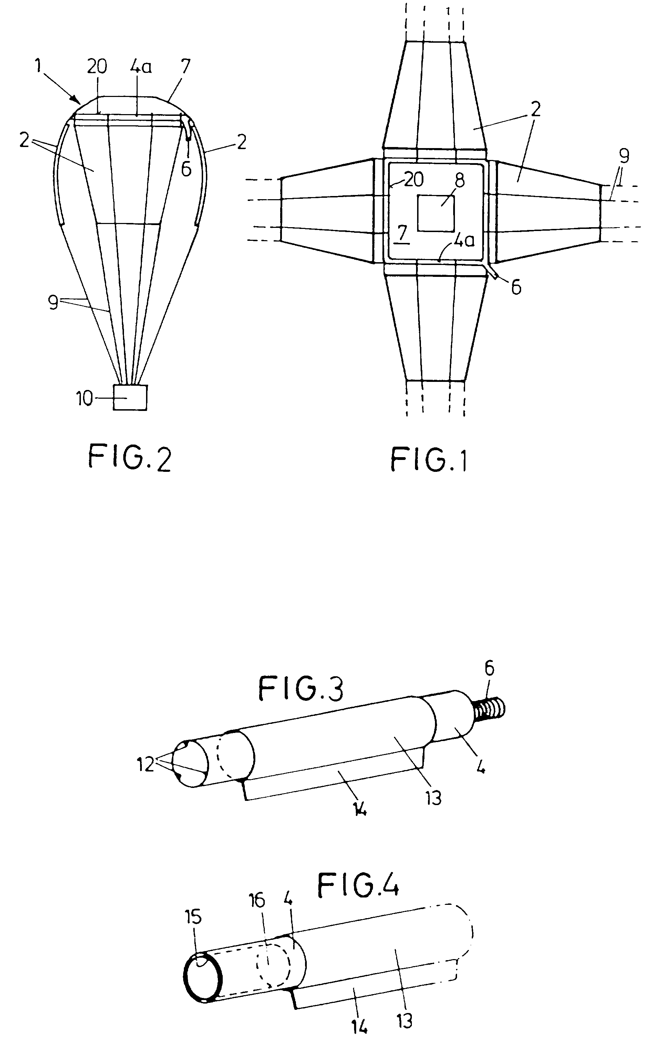

Nachfolgend wird die Erfindung anhand eines bevorzugten Ausführungsbeispiels in Verbindung mit der Zeichnung näher beschrieben. Dabei zeigen
- Fig. 1: eine Aufsicht auf einen Kreuzfallschirm mit Öffnungshilfe im flach ausgelegten Zustand,
- Fig. 2: eine schematische Darstellung des Fallschirms nach Fig. 1 im Schwebezustand,
- Fig. 3: eine perspektivische, teilweise aufgebrochene Darstellung eines Schlauchabschnitts im Ventilbereich,
- Fig. 4: eine Fig. 5 entsprechende Darstellung eines Schlauchabschnitts bei einer Konfiguration mit geschlossenem ende,

Ein in Fig. 1 dargestellter Kreuzfallschirm 1 besteht aus vier kreuzweise angeordneten Fallschirmbahnen 2. Längs des Außenrandes 3 dieser Fallschirmbahnen 2 ist ein erfindungsgemäßer Schlauchabschnitt 4^{a} als Öffnungshilfe befestigt, der mit einem Einlaßventil 6 versehen ist.

Die vier Stoffbahnen 2 sind kreuzförmig um eine zentrale Stoffbahn 7 herum angeordnet, welche eine zentrale Öffnung 8 aufweist. Bei dieser Ausführungsform ist der Schlauch 4a in einer viereckigen, in sich geschlossenen Konfiguration mit einem Ventil 6 längs der Außenkanten 20 der zentralen Stoffbahn angeordnet. Hierdurch wird eine besonders schnelle Öffnung des zentralen Stoffquadrates erreicht.

Wird ein derartiger Fallschirm mit einer daran über Leinen 9 befestigten Last 10 abgeworfen, stellt sich eine Konfiguration ein, wie sie in Fig. 2 schematisch veranschauchlicht ist.

In Fig. 3 ist perspektivisch ein Schlauch 4 aus Polyurethan auf einer Polyätherbasis dargestellt, der an dem einen Ende mit einem Ventil 6 versehen ist. Im Inneren des Schlauches sind längsverlaufende Rippen 12 vorgesehen, welche sicherstellen, daß der Schlauch trotz der materialbedingt ohnehin geringen diesbezüglichen Neigung nicht zusammenklebt und dementsprechend abschnittsweise nicht mit Druckluft beaufschlagbar ist.

Der Schlauch 4 ist mit einem Armierungsgewebe 13 vollständig umgeben, welches überlappende Ränder 14 aufweist. Längs dieser überlappenden Ränder 14 kann der Schlauch 4 mit dem Fallschirmtuch vernäht werden, wobei das Armierungsgewebe 13 den Schlauch 4, wie in Fig. 5 dargestellt, vollständig umgeben kann, so daß nur eine einzige Naht im Prinzip erforderlich ist, oder auch nur über einen Umfangswinkelbereich von 180°, so daß das Armierungsgewebe dann beiderseits des Schlauches mit dem Tuch vernäht wird.

In Fig.4 ist das geschlossene Ende eines Schlauchabschnittes 4 dargestellt, wobei dort das Armierungsgewebe 13 endet. Der Schlauch 4 ist über eine Quetschhülse 15 geschoben. In die Quetschhülse 15 ist ein Formstück 16 als Widerlager zum Verquetschen eingesetzt.

Als Material für den Schlauch wurde gefunden, daß Polyurethan auf Polyätherbasis eine Summe von Eigenschaften aufweist, welche es als für diesen spezifischen Einsatzzweck optimal erscheinen lassen. Insbesondere weist Polyurethan auf Polyätherbasis keine Anfälligkeit hinsichtlich Feuchtigkeit und Mikrobenbefall auf.

Im einzelnen sind hinsichtlich des verwendeten Materials folgende Daten zu messen:
- Einfriertemperatur: -50°C
   gemessen nach DIN 53513
   Selbst bei -60°C ist noch eine ausreichende Flexibilität und Bruchfestigkeit gegeben.
- Erhitzungsfähigkeit: Einsetzbar bis 100°C
   Sieben Tage Heißluft-Lagerung ergeben eine Zugfestigkeitsänderung von weniger als 30% Änderung der Bruchdehnung beträgt weniger als 30%
   gemessen nach DIN 53504
- Shore-Härte: 87±2
   gemessen nach DIN 53505
- Spezifisches Gewicht 1,12
   gemessen nach DIN 53479
- Zugfestigkeit: 50 N/mm²
   gemessen nach DIN 53504
- Bruchdehnung: 600%
   gemessen nach DIN 53504
- Weiterreißfestigkeit: 60 N/mm
   gemessen nach DIN53515
- Abrieb: 35 mm³
   gemessen nach DIN 53516
- Druckverformungsrest: 25% bei Raumtemperatur (20 bis 22°C)
- Zugfestigkeit nach 42tägiger Lagerung in Wasser von 80°C: 30 N/mm²
   gemessen nach DIN 53504
- Bruchdehnung: 650°
   gemessen nach DIN 53504
- Lichtempfindlichkeit: Oberflächlich gegeben, jedoch irrelevant, da der Schlauch stets von einem Armierungsgewebe ummantelt ist.

## Patentansprüche

1. Sprung- und Rettungsfallschirm der als Kreuzfallschirm (1) ausgebildet ist, der durch wenigstens vier durch je einen freien Schlitz voneinander getrennte, im geöffneten Zustand im wesentlichen vertikal verlaufende Stoffbahnen (2) gebildet ist, welche sich von den Seitenkanten einer zentralen Stoffbahn (7) nach außen wegerstrecken, dadurch gekennzeichnet, daß der Fallschirm eine Öffnungshilfe in Form eines längs wenigstens eines Randes- oder Nahtabschnittes des Fallschirmes, durch Druckluft aufblasbaren bzw. aufgeblasenen Schlauches (4) aufweist, und dadurch, daß der Schlauch (4) bzw. ein Schlauchabschnitt aus einem Polymethanschlauch auf Polyätherbasis besteht und wenigstens teilweise längs der Seitenkanten (20) der etwa quadratischen zentralen Stoffbahn (7, 7a) verläuft.

2. Fallschirm nach Anspruch 1, dadurch gekennzeichnet. daß der Schlauch (4a) sich als geschlossenes, viereckiges Gebilde im wesentlichen längs der Seitenkanten (20) der zentralen Stoffbahn (7) erstreckt.

## Claims

1. A sky-diving and emergency parachute in the form of a cross parachute (1) constituted by at least four webs of fabric (2), which are separated from each other by a free slit and run substantially vertically in the opened condition and which extend outwards from the lateral edges of a central web of fabric (7), characterized in that the parachute has an opening aid in the form of a hose (4) inflatable or inflated, respectively, by compressed air along an edge section or a seam section of the parachute, and in that the hose (4) or a hose section, respectively, consists of a polyether-based polyurethane hose and extends at least partially along the lateral edges (20) of the approximately square central web of fabric (7, 7a).

2. A parachute according to claim 1, characterized in that the hose (4a) is a closed, four-cornered formation, extending substantially along the lateral edges (20) of the central web of fabric (7).

## Revendications

1. Parachute de saut et de secours en forme d'un parachute en croix (1) constitué par au moins quatre plans d'étoffe (2), qui sont séparés l'un de l'autre par une fente libre et s'étendent, en état ouvert, essentiellement verticalement et qui, à partir des arêtes latérales d'un plan d'étoffe central (7), s'étendent vers l'extérieur, caractérisé en ce que le parachute présente une aide à l'ouverture en forme d'un tuyau flexible (4) gonflable, respectivement gonflé, à air comprimé le long d'au moins un segment d'arête ou de couture du parachute, et en ce que le tuyau flexible (4) ou un segment de tuyau flexible est un tuyau flexible polyuréthanique à base de polyéther et s'étend au moins partiellement le long des arêtes latérales (20) du plan d'étoffe central (7, 7a) à peu près carré.

2. Parachute selon la revendication 1, caractérisé en ce que le tuyau flexible (4a) est une création quadrangulaire fermée s'étendant essentiellement le long des arêtes latérales (20) du plan d'étoffe central (7).
